# EUROPEAN PATENT APPLICATION

(11) **EP 1 637 447 A1**
(43) Date of publication of application: **22.03.2006**
(21) Application number: 03736262.1
(22) Date of filing: 26.06.2003
(51) Int. Cl.: B63H 21/17

(54) **ELECTRIC MOTOR DRIVE SYSTEM**

(71) Applicant: Toshiba Mitsubishi-Electric Industrial Systems Corporation, Minato-ku, Tokyo 108-0073 (JP)
(72) Inventor: Toyoda, Masaru, c/o Mitsubishi Denki K.K., Tokyo 100-8310 (JP); Koyama, Masato, c/o Mitsubishi Denki K.K., Tokyo 100-8 310 (JP); Kamiyama, Isao, c/o Mitsubishi Denki K.K., Tokyo 100-8 310 (JP)
(74) Representative: HOFFMANN EITLE
(86) International application number: PCT/JP2003/008118
(87) International publication number: WO 2005/002039

(57) **Abstract**

An alternating current motor driving system provided with a plurality of alternating current generators, a common distribution bus, a plurality of power conversion devices, a plurality of power conversion control circuits, and a plurality of alternating current motors. According to one embodiment, each of the power conversion control circuits generates a current instruction for the corresponding alternating current motor based on a corrected speed instruction obtained by correcting a speed instruction for the corresponding power conversion device according to a bus frequency detection output. According to another embodiment, each of the power conversion control circuits generates a speed instruction for the corresponding alternating current motor in the range equal to or lower than an upper limit speed adjustment output obtained by adjusting an upper limit of the speed instruction for the corresponding alternating current motor according to a bus frequency detection output. According to still another embodiment, each of the power conversion control circuits has a current instruction unit for generating a current instruction for the corresponding alternating current motor in the range equal to or lower than an upper limit current adjustment output obtained by adjusting an upper limit of the current instruction for the corresponding alternating current motor according to a bus frequency detection output. Each of the power conversion devices controls, in accordance with a load fluctuation of the common distribution bus, an effective power exchanged with the corresponding alternating current motor based on the current instruction from the corresponding power conversion control circuit, thereby controlling the bus frequency to be a predetermined value corresponding to the corrected speed instruction, a predetermined value regulated by the upper limit speed adjustment output, or a predetermined value regulated by the upper limit current adjustment output.

## Description

### Technical Field

The present invention relates to an alternating current motor driving system for driving a plurality of alternating current motors and, particularly, to an alternating current motor driving system to be used for driving a plurality of alternating current motors via a plurality of power conversion devices connected to a common distribution bus to which a plurality of alternating current generators are connected.

### Background Art

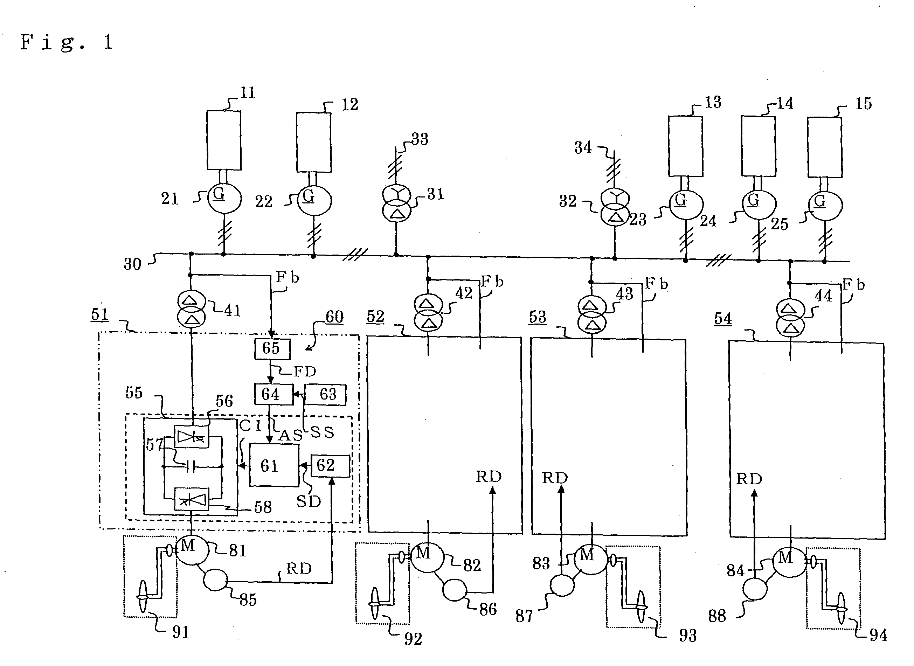

The driving system of alternating current motors of this type is disclosed in Fig. 1 of PCT Publication No. WO02/100716A1 and a paper written by S. Iden and W. Rzadki, which is entitled "Mains Power Quality of Ships with Electrical Devices" (EPE Conference Record, PP000099.pdf, 2001). The driving system disclosed in the prior arts is a driving system of a plurality of alternating current motors for driving a plurality of propellers (screws) for ship propulsion. The driving system uses a plurality of diesel engines as prime movers, and a plurality of alternating current generators are driven in such a manner that each of the alternating current generators is driven by a corresponding one of the diesel engines. The alternating current generators are connected to a common distribution bus to which a plurality of power conversion devices are connected, and each of the alternating current generators is connected to a corresponding one of the power conversion devices to drive the alternating current motors. Each of the alternating current motors is connected to a corresponding one of loading machines such as screws for ship propulsion, so that the screws for ship propulsion are respectively driven by the alternating current motors.

An electrical ship propulsion apparatus to which the above-described alternating current motor driving system is applied has advantages, as compared with a conventional ship propulsion apparatus which directly drives screws by the use of diesel engines, such as a reduced vibration, easy adjustment of the direction and the number of revolutions of each of the screws, a good driving efficiency, and so forth and, therefore, is used for floating hotels wherein comfortable driving is of importance and ice breakers which repeat forward and backward movements.

Also, an electrical LNG plant using the above-described alternating current motor driving system has appeared. The electrical LNG plant is a plant for liquefying a natural gas by using, as the loading machines, a plurality of compressors which are driven by a plurality of alternating current motors and has advantages such as a reduction in exhaust gas, a good driving efficiency, and so forth as compared with a conventional LNG plant wherein a plurality of compressors in a natural gas liquefying equipment are driven directly by gas turbines or steam turbines. In the electrical LNG plant, the compressors are driven in such a manner that the compressors are respectively connected to the alternating current motors which are driven by a plurality of power conversion devices connected to a common distribution bus.

However, the conventional alternating current motor driving system described above has a problem of system down. For instance, in the case where one of the diesel engines fails, a load on each of other diesel engines is increased and the number of revolutions of the diesel engine is reduced to cause reductions in output voltage and output frequency of the alternating current generator driven by the diesel engine, thereby causing reductions in bus voltage and bus frequency of the common distribution bus. When the reductions in bus voltage and bus frequency of the common distribution bus are equal to or below predetermined lower limits, a judgment of a system failure is made, whereby a circuit breaker disposed between the common distribution bus and each of the alternating current generators is opened. As a result, a system down occurs to stop the screws in the ship propulsion apparatus or to stop the compressors in the LNG plant. The system down due to the reductions in bus voltage and bus frequency of the common distribution bus occurs also in the case where one of the alternating current generators fails.

Also, in the case where one of the power conversion devices fails, the circuit breaker disposed between the failed power conversion device and the common distribution bus is opened. In this case, since a load on each of other diesel engines is reduced to increase the number of revolutions thereof, the bus voltage and the bus frequency of the common distribution bus are increased. When the bus voltage or the bus frequency is equal to or below a predetermined lower limit, a judgment of a system failure is made, and the circuit breakers disposed between the common distribution bus and the alternating current generators are opened to result in a system failure wherein all of the screws or the compressors are stopped. The system failure due to the increases in bus voltage and bus frequency of the common distribution bus occurs also in the case where one of the alternating current motors fails.

In each of the diesel engines, a fuel feed rate is adjusted usually by a governor control to control the number of revolutions. The output voltage of each of the alternating current generators is controlled by way of an exciting current adjustment. The bus frequency of the common distribution bus is suppressed by the governor control of each of the diesel engines, while the bus voltage of the common distribution bus is suppressed by the exciting current adjustment of each of the alternating current generators. However, since a response delay of the second order occurs in the governor control and the exciting current adjustment, it is difficult to control the bus voltage or the bus frequency of the common distribution bus to fall within the range of its upper and lower limits in the case where one of the diesel engines, the alternating current generators, the power conversion devices, and the alternating current motors fails, and, therefore, the system down occurs easily.

Particularly, for the purpose of reducing an investment cost, there is a tendency toward a reduction in numbers of diesel engines, alternating current generators, power conversion devices, and alternating current motors in the electrical ship propulsion device or the electrical LNG plant. In the case of reducing the numbers of the diesel engines, the alternating current generators, the power conversion devices, and the alternating current motors according to the tendency, a load fluctuation caused by a failure of one of these units is increased to make it further difficult to avoid the system down.

This invention provides an alternating current motor driving system which is so improved as to effectively avoid the system down.

### Disclosure of the Invention

An alternating current motor driving system according to this invention comprises: a plurality of alternating current generators driven by a prime mover; a common distribution bus to which the alternating current generators are connected; a plurality of power conversion devices connected to the common distribution bus; a plurality of power conversion control circuits respectively corresponding to the power conversion devices; a plurality of alternating current motors respectively driven by the power conversion devices; and a plurality of loading machines respectively driven by the alternating current motors, the alternating current motor driving system being characterized in that: each of the power conversion control circuits generates a current instruction for the corresponding power conversion device based on a corrected speed instruction obtained by correcting a speed instruction for the corresponding alternating current motor with a bus frequency detection output representing a detectedbus frequency of the common distribution bus; and each of the power conversion devices controls an effective power exchanged with the corresponding alternating current motor based on the current instruction from the corresponding power conversion control circuit, thereby controlling the bus frequency to be a predetermined value corresponding to the corrected speed instruction in response to a load fluctuation of the common distribution bus.

In the alternating current motor driving system according this invention, each of the power conversion control circuits respectively corresponding to the power conversion devices generates the current instruction for the corresponding power conversion device based on the corrected speed instruction obtained by correcting the speed instruction for the corresponding alternating current motor with the bus frequency detection output representing the detected bus frequency of the common distribution bus, so that the corrected speed instruction from the power conversion control circuit changes in response to the bus frequency. Accordingly, since each of the power conversion devices controls the bus frequency to be the predetermined value corresponding to the corrected speed instruction in accordance with the load fluctuation of the common distribution bus by controlling the effective power exchanged with the corresponding alternating current motor based on the corrected speed instruction from the power conversion control circuit, which is in response to the bus frequency, the fluctuation in bus bar frequency of the common distribution bus is readily kept within the range of its upper and lower limits, thereby making it possible to effectively avoid a system down even in the case where one of the alternating current generators, the power conversion devices, and the alternating current motors fails.

Another alternating current motor driving system according to this invention comprises: a plurality of alternating current generators driven by a prime mover; a common distribution bus to which the alternating current generators are connected; a plurality of power conversion devices connected to the common distribution bus; a plurality of power conversion control circuits respectively corresponding to the power conversion devices; a plurality of alternating current motors respectively driven by the power conversion devices; and a plurality of loading machines respectively driven by the alternating current motors, the alternating current motor driving system being characterized in that: each of the power conversion control circuits generates a current instruction for the corresponding power conversion device based on an upper limit speed adjustment output obtained by adjusting an upper limit of a speed instruction for the corresponding alternating current motor according to a bus frequency detection output representing a detected bus frequency of the common distribution bus, the current instruction for the corresponding power conversion device being in a range equal to or lower than the upper limit speed adjustment output; and each of the power conversion devices controls an effective power exchanged with the corresponding alternating current motor to fall in the range equal to or lower than the upper limit speed adjustment output to the corresponding alternating current motor based on the current instruction from the corresponding power conversion control circuit, thereby controlling the bus frequency to be a predetermined value regulated by the upper limit speed adj ustment output in response to a load fluctuation of the common distribution bus.

In the alternating current motor driving system according to this invention, each of the power conversion control circuits provided corresponding to the respective power conversion devices generates the current instruction for the corresponding power conversion device, which is in the range equal to or lower than the upper limit speed adjustment output, based on the upper limit speed adjustment output obtained by adjusting the upper limit of the speed instruction for the corresponding alternating current motor according to the bus frequency detection output representing the detected bus frequency of the common distribution bus, and each of the upper limit speed adjustment outputs of the power conversion control circuits changes in response to the bus frequency. Accordingly, since each of the power conversion devices controls the bus frequency to be the predetermined value regulated by the upper limit speed adjustment output in response to the load fluctuation of the common distribution bus by controlling the effective power exchanged with the corresponding alternating current motor in the range equal to or lower than the upper limit speed adj ustment output of the power conversion control circuit responding to the bus frequency and based on the current instruction from the corresponding power conversion control circuit, a system down is effectively avoided by readily keeping the fluctuation in bus frequency of the common distribution bus within a range of the upper and lower limits even in the case where one of the alternating current generators, the power conversion devices, and the alternating current motors fails.

Still another alternating current motor driving system according to this invention comprises: a plurality of alternating current generators driven by a prime mover; a common distribution bus to which the alternating current generators are connected; a plurality of power conversion devices connected to the common distribution bus; a plurality of power conversion control circuits respectively corresponding to the power conversion devices; a plurality of alternating current motors respectively driven by the power conversion devices; and a plurality of loading machines respectively driven by the alternating current motors, the alternating current motor driving system being characterized in that: each of the power conversion control circuits generates a current instruction for the alternating current motor based on an upper limit current adjustment output obtained by adjusting an upper limit of a current instruction for the corresponding power conversion device according to a bus frequency detection output repsenting a detected bus frequency of the common distribution bus, the current instruction for the corresponding alternating current motor being in a range equal to or lower than the upper limit current adjustment output; and each of the power conversion devices controls an effective power exchanged with the corresponding alternating current motor to fall in the range equal to or lower than the upper limit current adjustment output based on the current instruction from the corresponding power conversion control circuit, thereby controlling the bus frequency to be a predetermined value regulated by the upper limit current adjustment output in response to a load fluctuation of the common distribution bus.

In the still alternating current motor driving system according to this invention, each of the power conversion control circuits respectively corresponding to the power conversion devices generates the current instruction for the corresponding power conversion device, which is in the range equal to or lower than the upper limit current adjustment output, based on the upper limit current adjustment output obtained by adjusting the upper limit of the current instruction for the corresponding power conversion devices according to the bus frequency detection output representing the detected bus frequency of the common distribution bus, and each of the upper limit current adjustment outputs of the power conversion control circuits changes in response to the bus frequency. Accordingly, since each of the power conversion devices controls the bus frequency to be the predetermined value regulated by the upper limit current adjustment output in response to the load fluctuation of the common distribution bus by controlling the effective power exchanged with the corresponding alternating current motor to fall in the range equal to or lower than the upper limit current adjustment output from the corresponding power conversion control circuit, which is in response to the bus frequency, based on the current instruction from the corresponding power conversion control circuit, thereby making it possible to effectively avoid a system down by readily keeping the fluctuation in bus frequency of the common distribution bus within a range of its upper and lower limits even in the case where one of the alternating current generators, the power conversion devices, and the alternating current motors fails.

### Brief Description of the Drawings

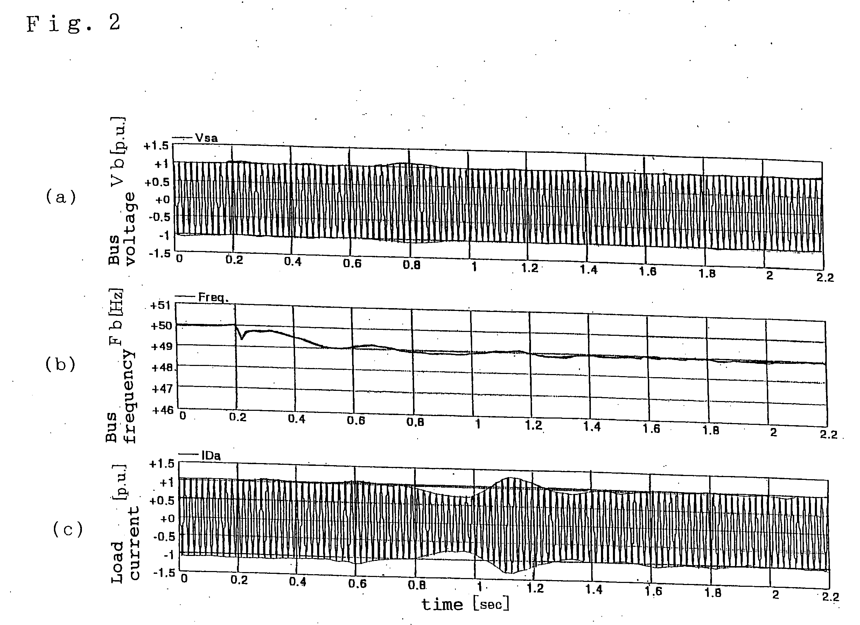

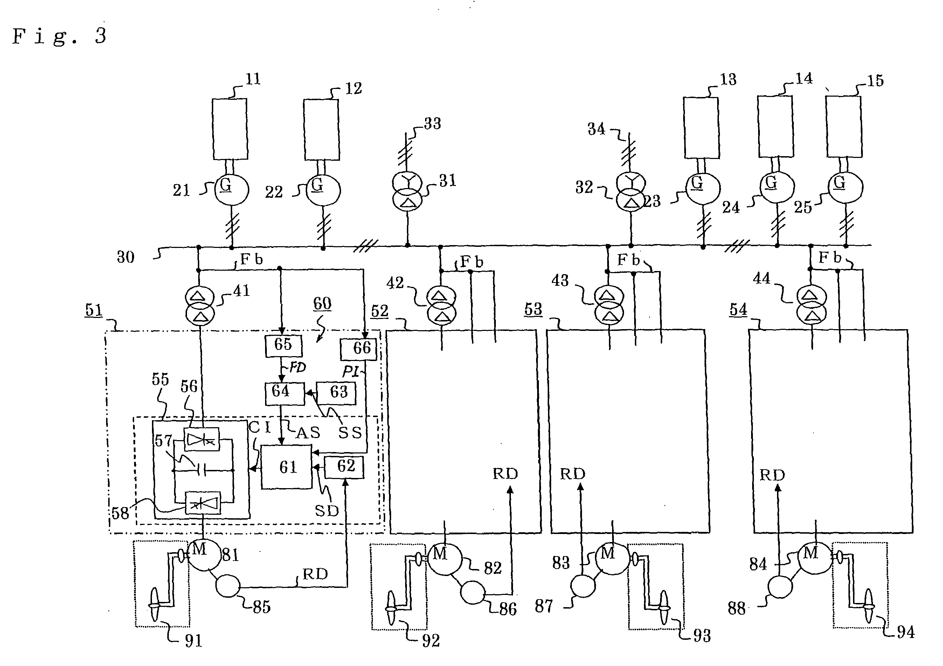

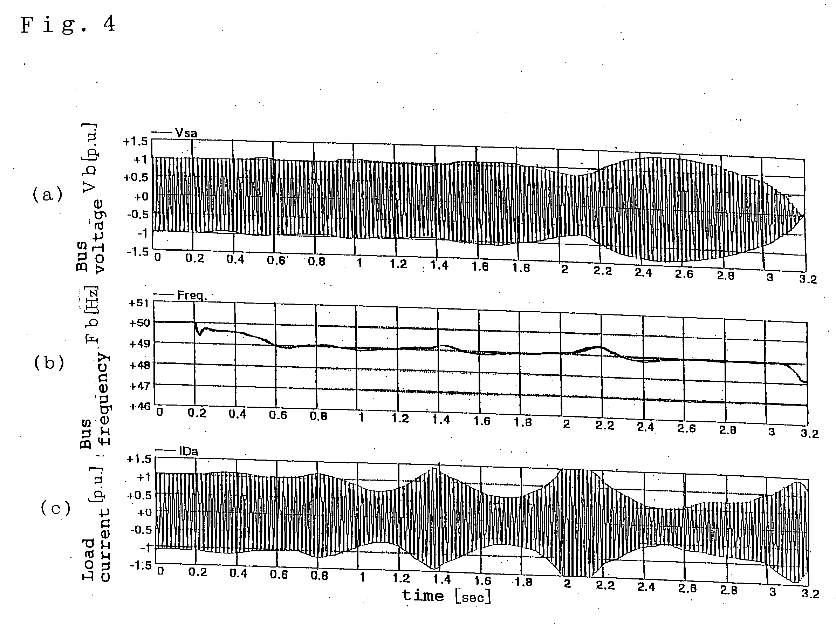

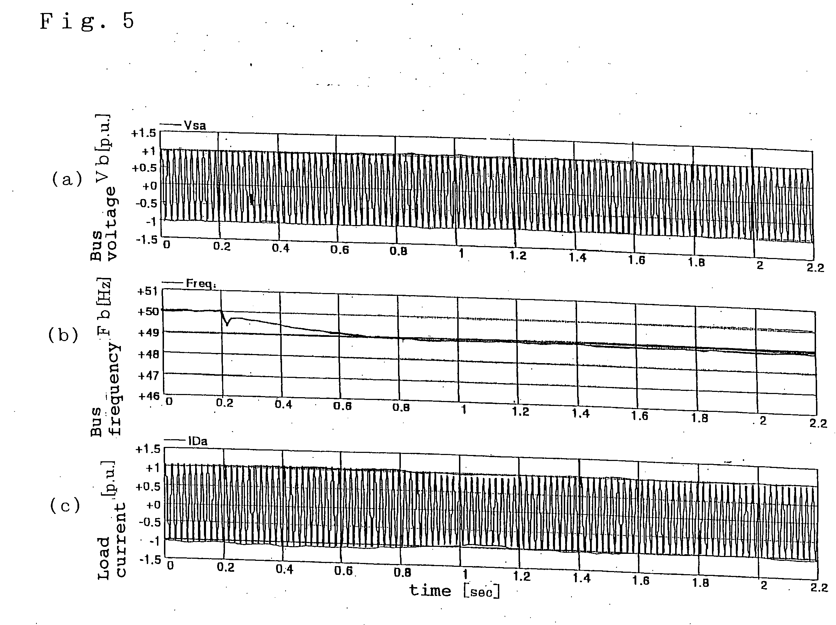

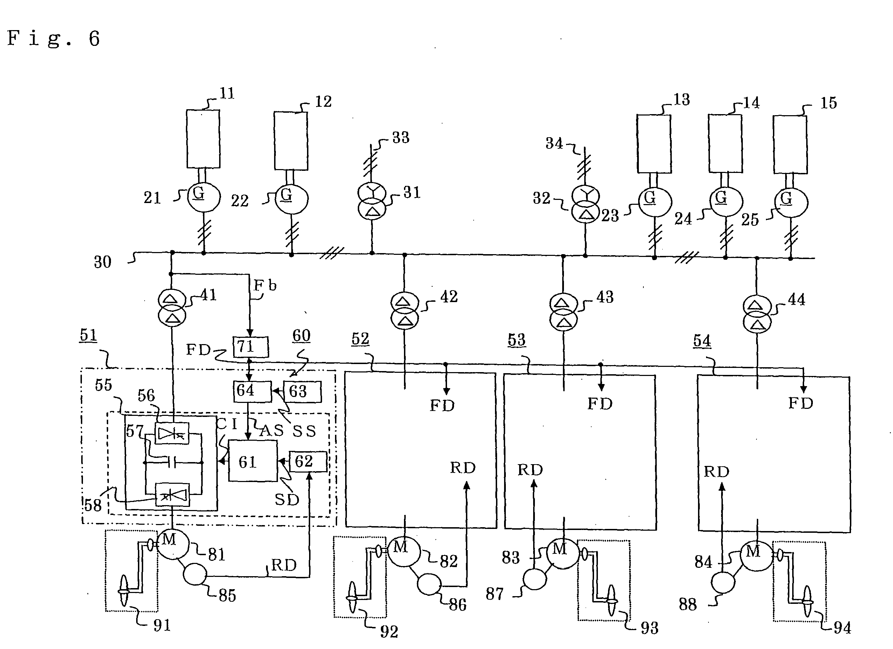

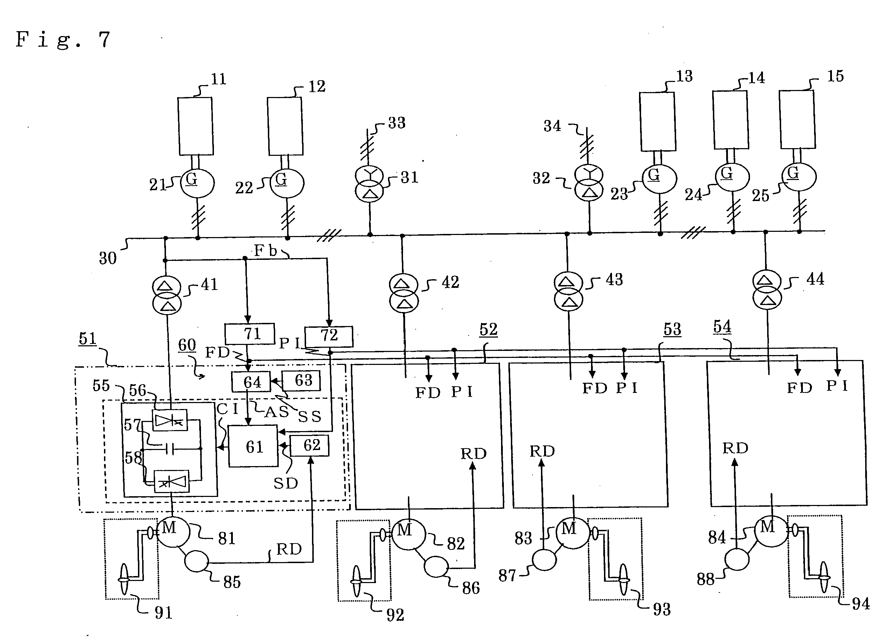

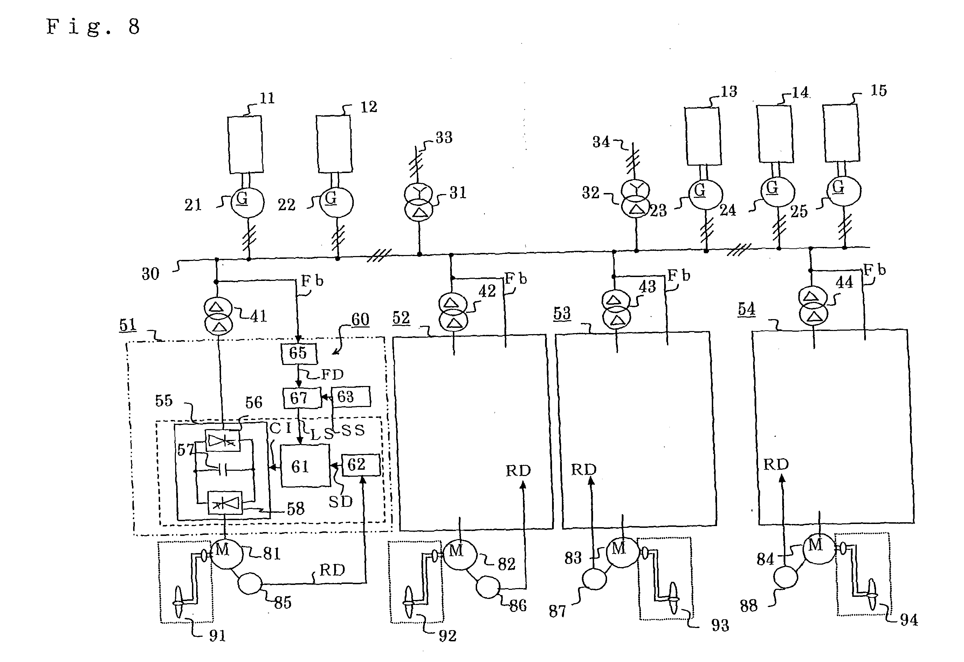

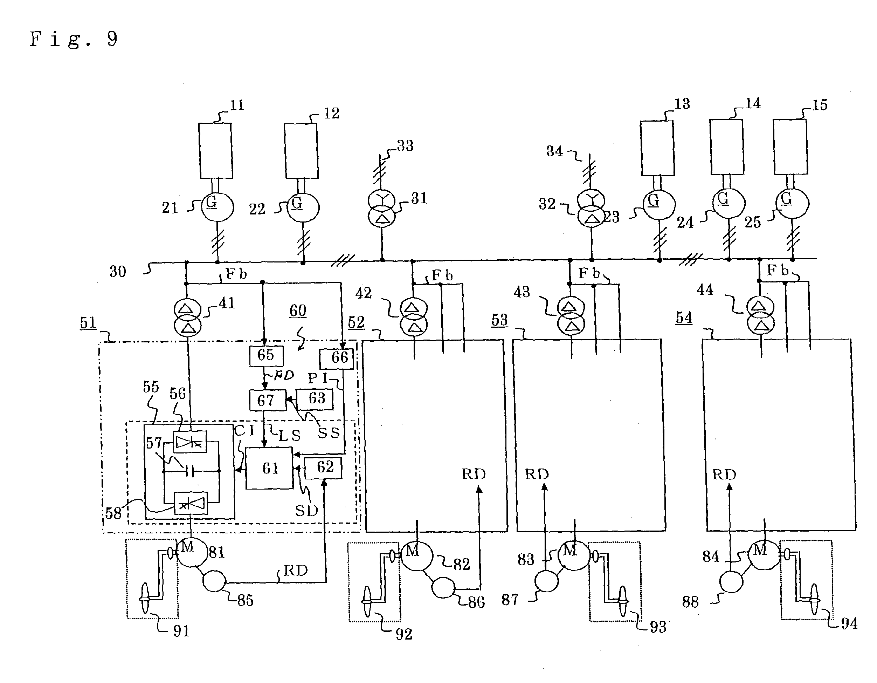

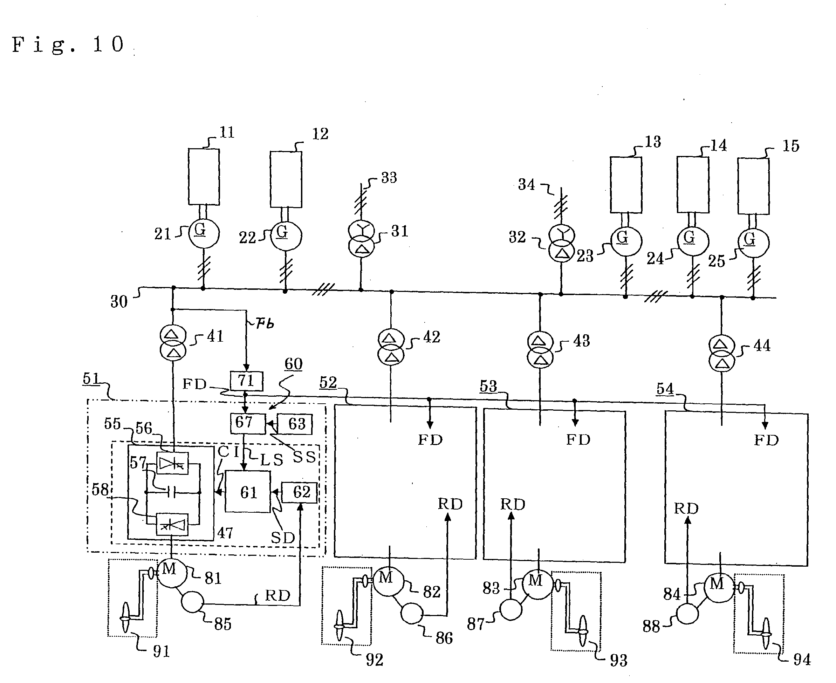

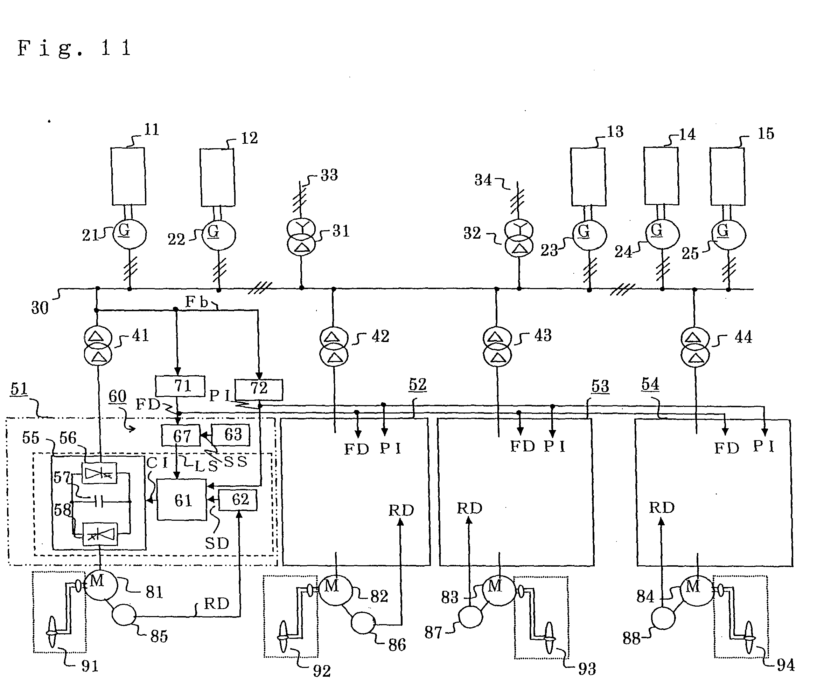

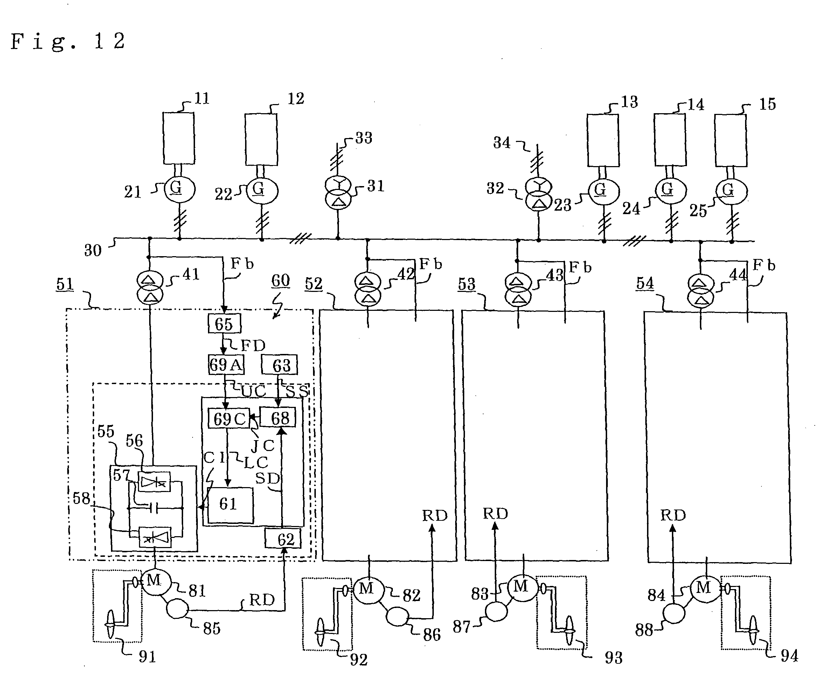

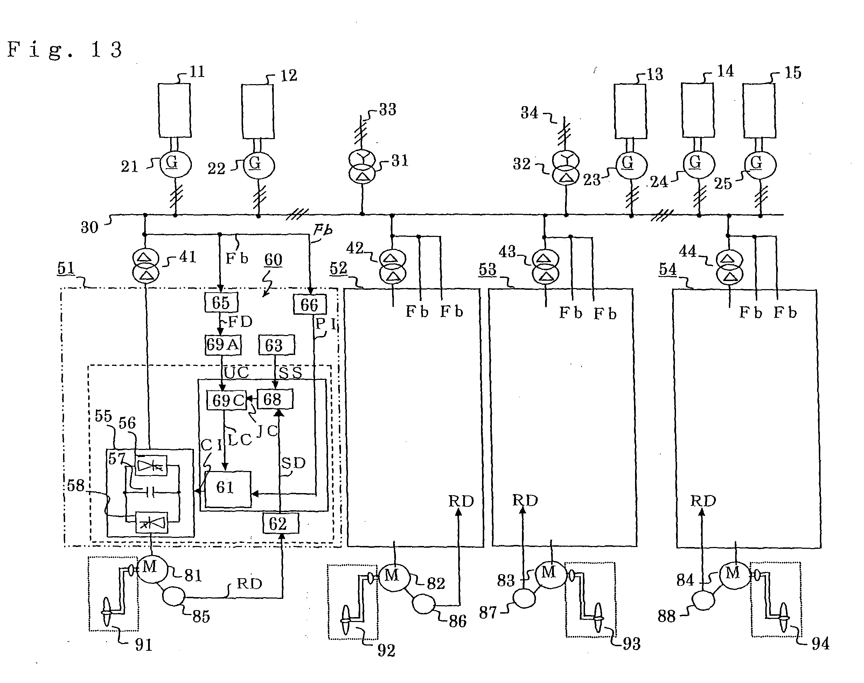

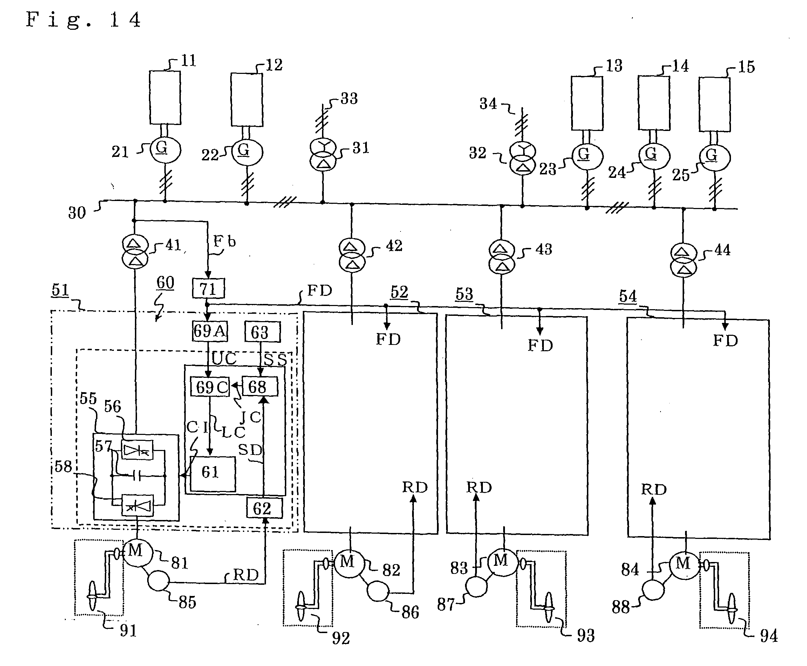

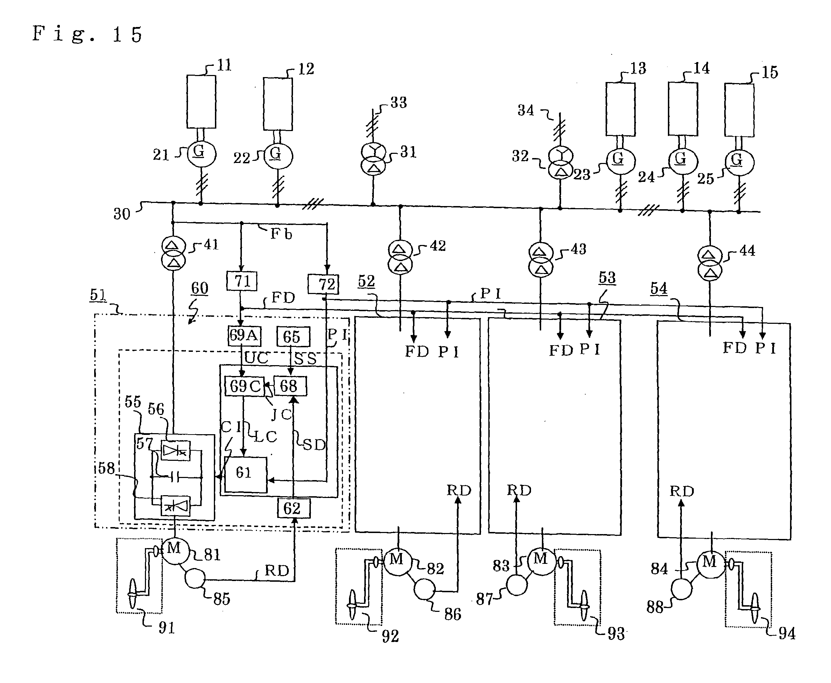

Fig. 1 is a system schematic showing a first embodiment of an alternating current motor driving system according to this invention; Fig. 2 is a diagram showing operation waveforms of the first embodiment; Fig. 3 is a system schematic showing a second embodiment of the alternating current motor driving system according to this invention; Fig. 4 is a diagram showing conventional operation waveforms corresponding to the second embodiment; Fig. 5 is a diagram showing operation waveforms of the second embodiment of this invention; Fig. 6 is a system schematic showing a third embodiment of the alternating current motor driving system according to this invention; Fig. 7 is a system schematic showing a fourth embodiment of the alternating current motor driving system according to this invention; Fig. 8 is a system schematic showing a fifth embodiment of the alternating current motor driving system according to this invention; Fig. 9 is a system schematic showing a sixth embodiment of the alternating current motor driving system according to this invention; Fig. 10 is a system schematic showing a seventh embodiment of the alternating current motor driving system according to this invention; Fig. 11 is a system schematic showing an eighth embodiment of the alternating current motor driving system according to this invention; Fig. 12 is a system schematic showing a ninth embodiment of the alternating current motor driving system according to this invention; Fig. 13 is a system schematic showing a tenth embodiment of the alternating current motor driving system according to this invention; Fig. 14 is a system schematic showing a eleventh embodiment of the alternating current motor driving system according to this invention; and Fig. 15 is a system schematic showing a twelfth embodiment of the alternating current motor driving system according to this invention.

### Best Mode for Carrying out the Invention

### First Embodiment

Shown in Fig. 1 is a first embodiment of the alternating current motor driving system according to this invention. The alternating current motor driving system is applicable to ship propulsion apparatuses, LNG plants, or blower driving apparatuses.

The alternating current motor driving system shown in Fig. 1 includes five prime movers 11 to 15, five alternating current generators 21 to 25, a common distribution bus 30, four transformers 41 to 44, four power conversion devices 51 to 54, four alternating current motors 81 to 84, and four loading devices 91 to 94.

Each of the prime movers 11 to 15 is a diesel engine. Each of the diesel engines 11 to 15 generates a driving force by burning a liquid fuel such as gasoline. As the prime movers, those generating a driving force by burning a gaseous fuel such as a propane gas in place of the liquid fuel may also be used. The number of the prime movers 11 to 15 to be equipped is not limited to five in so far as the number of the prime movers is in accordance with an investment cost. In the case of the application to a ship propulsion apparatus, two to ten prime movers are usually used. Each of the prime movers 11 to 15 is provided with a governor control device which controls a fuel flow rate to the prime mover and the number of revolutions of the prime mover.

The number of the alternating current generators 21 to 25 is set to be equal to or lower than the number of the prime movers 11 to 15. For instance, two or three alternating current generators may be driven by one prime mover. In the system shown in Fig. 1, each of the five prime movers 11 to 15 drives one alternating current generator, i.e., the five prime movers 11 to 15 respectively drive the five alternating current generators 21 to 25. The alternating current generators 21 to 25 are three phase alternating current generators, for example, each of which generates a three-phase alternating current output. Single-phase alternating current generators may also be used as the alternating current generators. Each of the alternating current generators 21 to 25 is provided with an exciting current adjustment device, and an output voltage of the three-phase alternating current output is adjusted by adjusting an exciting current by the use of the exciting current adjustment device. Based on the control on the number of revolutions of the prime movers 11 to 15 by the governor control devices, output frequencies of the alternating current generators 21 to 25 are adjusted.

The common distribution bus 30 has a structure of a three-phase distribution bus bar, for example. In the case where the alternating current generators 21 to 25 are the single-phase alternating current generators, the common distribution bus 30 is a single-phase distribution bus bar. Three phase output terminals of the alternating current generators 21 to 25 are connected to the common distribution bus 30. The alternating current generators 21 to 25 are connected to the common distribution bus 30 in such a fashion that they are parallel to one another. A circuit breaker (not shown) is disposed between the common distribution bus 30 and each of the alternating current generators 21 to 25. Further, low voltage wirings 33, 34 are connected to the common distribution bus 30 via the transformers 31, 32 to enable a power supply to a low voltage load. Each of the transformers 31, 32 in the first embodiment is a three phase transformer wherein a primary thereof has a Δ connection and a secondary thereof has a Y connection.

Each of the transformers 41 to 44 is connected to the common distribution bus 30 via a circuit breaker (not shown), the transformers 41 to 44 being disposed in parallel to one another. Each of the transformers 41 to 44 in the first embodiment is a three-phase transformer wherein both primary and secondary thereof have a Δ connection.

The power conversion devices 51 to 54 are respectively connected to the secondaries of the transformers 41 to 44. Because the power conversion devices 51 to 54 are identical in configuration, an internal circuit of the power conversion circuit 51 is shown in the drawing with the details of the power conversion devices 52 to 54 being omitted. Each of the power conversion devices 51 to 54 includes a power conversion circuit 55 for converting an alternating current and a power conversion control circuit 60 for the power conversion circuit 55.

The alternating current motors 81 to 84 are respectively connected to the power conversion devices 51 to 54. The power conversion circuit 55 of each of the power conversion devices 51 to 54 exchanges an effective power and an ineffective power with the corresponding one of the alternating current motors 81 to 84 and is capable of controlling the effective power and the ineffective power.

A converter/inverter type power conversion circuit constituted of a high efficiency converter 56 for converting an alternating current power to a direct current power, a smoothing condenser 57 for smoothing the converted direct current power, and a self-excited inverter 58 for converting the direct current power to an alternating current power again is used as the power conversion circuit 55, for example. An alternating current/alternating current type power conversion circuit using a matrix converter may also be used as the power conversion circuit 55.

The power conversion control circuits 60 respectively included in the power conversion devices 51 to 54 have an identical structure. In the first embodiment shown in Fig. 1, each of the power conversion control circuits 60 includes a control instruction unit 61, a speed detection output unit 62 for respectively outputting speed detection outputs of the alternating current motors 81 to 84, a speed instruction output unit 63, a speed instruction correction unit 64, and a bus frequency detection unit 65.

The control instruction unit 61 supplies a current instruction CI to the power conversion circuit 55, and the power conversion circuit 55 generates a driving current for the corresponding one of the alternating current motors 81 to 84 based on the current instruction CI to drive the corresponding one of the alternating current motors 81 to 84. The speed information output unit 62 calculates the number of revolutions of the corresponding one of the alternating current motors 81 to 84 based on a revolution detection output RD from corresponding one of revolution detection units 85 to 88 respectively provided in the alternating current motors 81 to 84 to output a speed detection output SD which is in proportion to the number of revolutions of the corresponding one of the alternating current motors 81 to 84. The speed instruction output unit 63 generates a speed instruction SS which is a reference value for the speed detection output SD based on an external instruction. The speed instruction SS is set externally or selected among a plurality of stored instruction values based on an external signal.

The speed instruction correction unit 64 generates a corrected speed instruction AS. The bus frequency detection unit 65 is directly connected to the common distribution bus 30 and outputs a bus frequency detection output FD which is in proportion to a bus frequency Fb of an alternating current output in the common distribution bus 30. The speed instruction correction unit 64 receives the speed instruction SS from the speed instruction output unit 63 and the bus frequency detection output FD from the bus frequency detection unit 65 and generates the corrected speed instruction AS which is obtainable by correcting the speed instruction SS with the bus frequency detection output FD to supply the corrected speed instruction AS to the control instruction unit 61.

The control instruction unit 61 receives the corrected speed instruction AS from the speed instruction correction unit 64 and the speed detection output SD from the speed information output unit 62 to supply to the power conversion circuit 55 a current instruction CI which equalizes the speed detection output SD with the corrected speed instruction AS. The power conversion circuit 55 generates an alternating current output with a current based on the current instruction CI.

The alternating current motors 81 to 84 are directly connected to respective outputs of the power conversion circuits 55 of the power conversion devices 51 to 54 to be driven by the alternating currents of the power conversion circuits 55. The alternating current motors 81 to 84 are respectively provided with the revolution detection units 85 to 88 each of which detects the number of revolutions of the corresponding one of the alternating current motors 81 to 84 to supply the revolution detection output RD to the speed detection output unit 62. The alternating current motors 81 to 84 are respectively coupled to the loading machines 91 to 94 which are directly driven by the alternating current motors 81 to 84. The loading machines 91 to 94 serve as screws when applied to a ship propulsion apparatus or serve as compressors when applied to an LNG plant.

In the first embodiment, each of the power conversion devices 51 to 54 applies the corrected speed instruction AS obtained by correcting the speed instruction SS according to the bus frequency fb to the current instruction unit 61 in response to a fluctuation in bus frequency Fb of the common distribution bus 30. The control instruction unit 61 of each of the power conversion devices 51 to 54 changes the current output of the corresponding one of the power conversion circuits 55 in response to the fluctuation in bus frequency Fb to change the effective power exchanged between the power conversion circuit 55 and the corresponding alternating current motors 81 to 84 along with the change in current output, thereby controlling the number of revolutions of each of the alternating current motors 81 to 84 to be kept at a predetermined value which corresponds to the corrected speed instruction AS. As a result, each of the alternating current motors 81 to 84 is controlled in such a manner that the number of revolutions thereof is changed to the predetermined revolution speed corresponding to the corrected speed instruction AS and then kept at the predetermined revolution speed, and the bus frequency Fb is so controlled as to keep a predetermined value corresponding to the corrected speed instruction AS after being changed to the predetermined value.

More specifically, in the case where one of the five prime movers 11 to 15 or one of the five alternating current generators 21 to 25 fails, the load on the common distribution bus 30 is increased to reduce the bus voltage and the bus frequency, and the corrected speed instruction AS is also reduced in response to the reduction in bus frequency Fb. The numbers of revolutions of the alternating current motors 81 to 84 are reduced in response to the reduction in the corrected speed instruction AS to reduce an overall load, and, when the numbers of revolutions of the alternating current motors 81 to 84 are reduced to a predetermined value, the number of revolutions of the alternating current motors 81 to 84 and the corrected speed instruction AS are stabilized at the predetermined values and controlled to maintain the predetermined values. As a result, operations at the number of revolutions corresponding to the corrected speed instruction AS of the alternating current motors 81 to 84 are continued, and the bus frequency Fb is controlled to be maintained at the predetermined value corresponding to the corrected speed instruction AS.

In the case where the power conversion device 51 (one of the four power conversion devices 51 to 54) or the alternating current motor 81 (one of the four alternating current motors 81 to 84) fails, the load on the common distribution bus 30 is reduced to increase the bus voltage and the bus frequency. In response to the increase in bus frequency, the corrected speed instruction AS is also increased, and each of the power conversion devices 52 to 54 increases the number of revolutions of the corresponding one of the alternating current motors 82 to 84. When the number of revolutions reaches to the predetermined value, the corrected speed instruction AS and the number of revolutions of each of the alternating current motors 82 to 84 are stabilized at the predetermined values and controlled to maintain the predetermined values. The bus frequency Fb is also controlled to maintain a predetermined value in response to the predetermined number of revolutions of the alternating current motors 82 to 84, so that operations of the alternating current motors 82 to 84 are continued by the remaining power conversion devices 52 to 54.

By controlling the corrected speed instruction AS and the revolution speed of each of the alternating current motors in such a manner that the corrected speed instruction AS is in response to the bus frequency detection output FD and the revolution speed is corrected to stabilize in a short time of from 0.5 to 1 second following the corrected speed instruction AS, and by so adjusting settings as to prevent a judgment of system down from being made during the stabilization time, the operations of the alternating current motors are continued with the system down being avoided.

The screws of a ship or the compressors of an LNG plant described herein as the loading machines 91 to 94 are wind/hydraulic power machines each of which applies a square torque load, and a power consumption characteristic thereof changes in proportion to the third power of the revolution speed. That is, since the power consumption changes largely in proportion to the third power of the revolution speed, the power load changes largely due to the change in the revolution speed of the alternating current motors 81 to 84 even in the case where the revolution speed changes slightly, and, by the use of the large fluctuation in power load, the corrected speed instruction AS and the revolution speed of the alternating current motors 81 to 84 are changed slightly and stabilized. Other than the screws of ships and the compressors in LNG plants, blowers are classified as the wind/hydraulic power machines. The loading machines may be applied to the blowers.

Shown in Fig. 2 are examples of changes in characteristics according to the first embodiment. Shown in Fig. 2 (a) is the bus voltage Vb; shown in Fig. 2(b) is the bus frequency Fb; and shown in Fib 2(c) is the load current of the common distribution bus 30. The bus voltage Vb and the load current are indicated by the unit of [p.u] ., and the bus frequency is indicated by the unit of [Hz]. The horizontal axis indicates time (seconds). Though a reduction in bus frequency Fb from +50 [Hz] is observed at the time point of 0.2 second from the start point 0, the bus frequency Fb is almost equal to +49 [Hz] at the time point of 0.8 second from the start point 0 and stabilized at the frequency thereafter.

### Second Embodiment

Shown in Fig. 3 is a second embodiment of the alternating current motor driving system according to this invention. In the second embodiment, an ineffective power instruction unit 66 is added to the power conversion control circuit 60 of each of the power conversion devices 51 to 54, and the control instruction unit 61 performs an ineffective power adjustment of the power conversion circuit 55 based on an ineffective power instruction PI from the ineffective power instruction unit 66. Other components of the constitution is the same as those of the first embodiment, and the identical components are indicated by the same reference numeral to omit the description thereof.

The ineffective power instruction unit 66 is included in each of the power conversion control circuits 60 of the power conversion devices 51 to 54. The ineffective power instruction unit 66 is directly connected to the common distribution bus 30 to detect the bus voltage Vb of the common distribution bus 30 and calculates an ineffective power required for maintaining the bus voltage Vb at a predetermined value in response to the bus voltage Vb, thereby generating the ineffective power instruction PI. The control instruction unit 61 performs the adjustment of the ineffective power of the power conversion device 55 based on the ineffective power instruction PI. The adjustment of the ineffective power is performed so as to maintain the bus voltage Vb at the predetermined value by adjusting the ineffective power exchanged between the power conversion circuit 55 and the corresponding one of the alternating current motors 81 to 84. The ineffective power adjustment by the ineffective power instruction unit 66 is executed in each of the power conversion devices 51 to 54.

In the case where one of the prime movers 11 to 15 and the alternating current generators 21 to 25 fails or in the case where one of the power conversion circuits 51 to 54 and the alternating current motors 81 to 84 fails, the load on the common distribution bus 30 fluctuates to cause the bus voltage Vb to fluctuate with the bus frequency Fb. In the case where the fluctuation in bus voltage Vb is suppressed by the alternating current voltage adjusting unit provided in the power generation system, it is possible to continue the driving of the alternating current motors except for the one connected to the failed power conversion device with the bus voltage Vb being maintained as shown in Fig. 2 (a). In the case where the fluctuation in bus voltage Vb cannot be suppressed by the alternating current voltage adjustment unit provided in the power generation system, the fluctuation in bus voltage Vb is increased as shown in Fig. 4(a) to result in stoppage of the system.

In the second embodiment, the bus voltage Vb is detected by the ineffective power instruction unit 66 to calculate the ineffective power required for suppressing the fluctuation in the bus voltage Vb and maintaining the bus voltage Vb at the predetermined value, and the ineffective power instruction PI is applied to the control instruction unit 61 based on the required ineffective power. Therefore, as shown in Fig. 5 (a), the bus voltage Vb is maintained at the predetermined value to continue the driving of the alternating current motors much more stably. Shown in each of Figs. 4(b) and 5(b) is the bus frequency Fb, and shown in each of Figs. 4 (c) and 5(c) is the load current.

### Third Embodiment

Shown in Fig. 6 is a third embodiment of the alternating current motor driving system according to this invention. In the third embodiment, a common bus frequency detection unit 71 is provided so that a bus frequency detection output FD is distributed from the common bus frequency detection unit 71 to the power conversion devices 51 to 54. Other components of the constitution are the same as those of the first embodiment, and the identical components are indicated by the same reference numeral to omit the description thereof.

In the third embodiment, the bus frequency detection unit 71 is shared among the power conversion devices 51 to 54 and provided in the external of the power conversion devices 51 to 54. The bus frequency detection unit 71 is directly connected to the common distribution bus 30 and detects the bus frequency Fb to generate the bus frequency detection output FD. The bus frequency detection output FD is distributed to the speed instruction correction units 64 of the power conversion devices 51 to 54. Each of the speed instruction correction units 64 generates the corrected speed instruction AS in the same manner as in the first embodiment to supply the corrected speed instruction AS to the control instruction unit 61.

The effect achieved by the first embodiment is also achievable by the third embodiment. Further, since the bus frequency detection unit 71 is shared among the power conversion devices 51 to 54, as compared with an embodiment wherein the bus frequency detection unit 64 is disposed for each of the power conversion devices 51 to 54, a variation in characteristics of the bus frequency detection units 64 is eliminated and the power conversion devices 51 to 54 are controlled more uniformly, thereby making it possible to reduce the number of the bus frequency detection units and to simplify the constitution.

### Fourth Embodiment

Shown in Fig. 7 is a fourth embodiment of the alternating current motor driving system according to this invention. In the fourth embodiment, a common bus frequency detection unit 71 and a common ineffective power instruction unit 72 are provided, so that a bus frequency detection output FD is distributed from the common bus frequency detection unit 71 to the power conversion devices 51 to 54 and an ineffective power instruction PI is distributed from the common ineffective power instruction unit 72 to the power conversion devices 51 to 54. Other components of the constitution are the same as those of the first embodiment, and the identical components are indicated by the same reference numeral to omit the description thereof.

In the fourth embodiment, the bus frequency detection unit 71 and the ineffective power instruction unit 72 are shared among the power conversion devices 51 to 54 and provided externally from the power conversion devices 51 to 54. The bus frequency detection unit 71 is directly connected to the common distribution bus 30 and detects the bus frequency Fb to generate the bus frequency detection output FD. The bus frequency detection output FD is distributed to the speed instruction correction units 64 of the power conversion control circuits 60 of the power conversion devices 51 to 54. Each of the speed instruction correction unit 64 generates the corrected speed instruction AS in the same manner as in the first embodiment to supply the corrected speed instruction AS to the control instruction unit 61.

The ineffective power instruction unit 72 is connected directly to the common distribution bus 30, too, and detects the bus voltage Vb to generate the ineffective power instruction PI for maintaining the bus voltage Vb at a predetermined value. The ineffective power instruction PI is supplied to the control instruction units 61 of the power conversion control circuits in the power conversion devices 51 to 54. Each of the control instruction unit 61 adjusts the ineffective power exchanged between the corresponding one of the power conversion devices 51 to 54 and the corresponding one of the alternating current motors 81 to 84 in response to the ineffective power instruction PI in the same manner as in the second embodiment to maintain the bus voltage Vb at the predetermined value.

The effect achieved by the second embodiment is also achievable by the forth embodiment. Further, since the bus frequency detection unit 71 and the ineffective power instruction unit 72 are shared among the power conversion devices 51 to 54, as compared with an embodiment wherein the bus frequency detection unit 64 and the ineffective power instruction unit 66 are disposed in each of the power conversion control circuit 60 of the power conversion devices 51 to 54, variations in characteristics of the bus frequency detection units 64 and the ineffective power instruction units 66 are eliminated, and the power conversion devices 51 to 54 are controlled more uniformly, thereby making it possible to reduce the numbers of the bus frequency detection units and the ineffective power instruction units and to simplify the constitution.

### Fifth Embodiment

Shown in Fig. 8 is a fifth embodiment of the alternating current motor driving system according to this invention. Though the speed instruction correction unit 64 which corrects the speed instruction SS from the speed instruction unit 63 with the bus frequency detection output FD from the bus frequency detection unit 65 to output the corrected speed instruction AS is used in the first to fourth embodiments shown in Figs. 1, 3, 6, and 7, an upper limit speed adjustment unit 67 for adjusting an upper limit of the speed instruction SS is used in place of the speed instruction correction unit 64 in each of the power conversion control circuits 60 of the power conversion devices 51 to 54 in the fifth embodiment.

The upper limit speed adjustment unit 67 internally calculates an upper limit speed adjustment output US for the speed instruction SS from the speed instruction unit 63 in response to the bus frequency detection output FD from the bus frequency detection unit 65. The upper limit speed adjustment output US is proportional to the bus frequency detection output FD, so that the upper limit speed adjustment output US is reduced or increased with a reduction or an increase in bus frequency Fb. The upper limit speed adjustment output US serves as the upper limit for the speed instruction SS passing through the upper limit speed adjustment unit 67 and forcibly regulates the speed instruction SS within the range equal to or lower than the upper limit speed adjustment output US in response to a fluctuation in bus frequency Fb. The upper limit speed adjustment unit 67 outputs a speed instruction LS regulated to be equal to or lower than the upper limit speed adjustment output US, and the regulated speed instruction LS is supplied to the control instruction unit 61.

The speed instruction SS is output as the speed instruction LS when the speed instruction SS is lower than the upper limit speed adjustment output US, while the speed instruction LS is regulated to be below the upper limit speed adjustment output US when the speed instruction SS is equal to or higher than the upper limit speed adjustment output US. As a result, the power conversion circuit 55 supplies a current regulated by the upper limit speed adjustment output US to the corresponding one of the alternating current motors 81 to 84 to exchange an effective power regulated by the upper limit speed adjustment output US with the corresponding one of the alternating current motors 81 to 84, and each of the alternating current motors 81 to 84 is driven at a revolution speed regulated by the upper limit speed adjustment output US.

The speed instruction LS is maintained within the range equal to or lower than the upper limit speed adjustment output US in response to the fluctuation in bus frequency Fb, and each of the corresponding power conversion devices 51 to 54 controls the revolution speed of the corresponding one of the alternating current motors 81 to 84 to be equal to or lower than that corresponding to the upper limit speed adjustment output US. Since the upper limit speed adjustment output US is adjusted in accordance with the bus frequency detection output FD, each of the power conversion devices 51 to 54 continues a power supply to the corresponding one of the loading machines 91 to 94 with the bus frequency Fd being maintained at a predetermined value in response to a load fluctuation of the common distribution bus 30 in the same manner as in the first embodiment.

More specifically, in the case where one of the five prime movers 11 to 25 or one of the five alternating current generators 21 to 25 fails, the load on the common distribution bus 30 is increased to reduce the bus voltage and the bus frequency, and the upper limit speed adjustment output US is also reduced in response to the reduction in bus frequency Fb. Since the revolution speed of each of the alternating current motors 81 to 84 is reduced to be equal to or lower than the upper limit speed adjustment output US in response to the reduction in upper limit speed adjustment output US to reduce an overall load, when the revolution speed of each of the alternating current motors 81 to 84 is reduced to a certain predetermined value, the revolution speed and the upper limit speed adjustment output US of the alternating current motors 81 to 84 are stabilized at the predetermined values and controlled to maintain the predetermined values. As a result, operations of the alternating current motors 81 to 84 are continued with the predetermined revolution speed which is regulated to be equal to or lower than the upper limit speed adjustment output US, and the bus frequency Fb is controlled to be maintained at the predetermined value regulated by the upper limit speed adjustment output US.

In the case where the power conversion device 51 (one of the four power conversion devices 51 to 54) or the alternating current motor 81 (one of the four alternating current motors 81 to 84) fails, the load on the common distribution bus 30 is reduced to increase the bus voltage and the bus frequency. The upper limit speed adjustment output US is increased in response to the increase in bus frequency, so that the revolution speed of each of the alternating current motors 82 to 84 to which the power conversion devices 52 to 54 correspond is increased. When the revolution speed of each of the alternating current motors 82 to 84 is increased to a predetermined value, the upper limit speed adjustment output US and the revolution speed of the alternating current motors 82 to 84 are stabilized at the predetermined values and controlled to maintain the predetermined values, and the bus frequency Fb is also controlled to be maintained at a predetermined value corresponding to the predetermined revolution speed, so that operations of the alternating current motors 82 to 84 are respectively continued by the power conversion devices 52 to 54.

By controlling the upper limit speed adjustment output US and the revolution speed of each of the alternating current motors in such a manner that the upper limit speed adjustment output US is in response to the bus frequency detection output FD and the revolution speed stabilizes in a short time of about 0. 5 to 1 second following the upper limit speed adj ustment output US, and by so adjusting settings as to prevent a judgment of system down from being made during the stabilization time, the operations of the alternating current motors are continued with the system down being avoided.

### Sixth Embodiment

Shown in Fig. 9 is a sixth embodiment of the alternating current motor driving system according to this invention. In the sixth embodiment, the upper limit adjusting unit 67 for adjusting and setting the upper limit speed adjustment output US for the speed instruction SS is used in the same manner as in the fifth embodiment, and the ineffective power instruction unit 66 is added to each of the power conversion control circuits 60 of the power conversion devices 51 to 54 in the same manner as in the second embodiment shown in Fig. 3.

The ineffective power instruction unit 66 is directly connected to the common distribution bus 30 like the ineffective power instruction unit 66 of the second embodiment to detect the bus voltage Vb of the common distribution bus 30, and calculates an ineffective power required for maintaining the bus voltage Vb at a predetermined value depending on the bus voltage Vb to generate an ineffective power instruction PI. In the sixth embodiment, too, the control instruction unit 61 performs an adjustment of an ineffective power of the power conversion circuit 55 based on the ineffective power instruction PI. The ineffective power exchanged between each of the power conversion circuits 55 and the corresponding one of the alternating current motors 81 to 84 is adjusted so as to maintain the bus voltage Vb at the predetermined value. The ineffective power adjustment by the ineffective power instruction unit 66 is executed in each of the power conversion devices 51 to 54, so that the loading machines 91 to 94 are driven continuously with the bus voltage Vb being adjusted to and stabilized at the predetermined value.

### Seventh Embodiment

Shown in Fig. 10 is a seventh embodiment of the alternating current motor driving system according to this invention. In the seventh embodiment, the upper limit speed adjustment unit 67 for calculating the upper limit speed adjustment output US for the speed instruction SS is used in each of the power conversion control circuits 60 of the power conversion devices 51 to 54 in the same manner as in the fifth embodiment, and the bus frequency detection unit 71 is shared among the upper limit speed adjustment units 67 of the power conversion control circuits 60.

The effect achieved by the fifth embodiment is also achievable by the seventh embodiment. Further, since the bus frequency detection unit 71 is shared among the power conversion devices 51 to 54, as compared with an embodiment wherein the bus frequency detection unit 64 is disposed for each of the power conversion devices 51 to 54, a variation in characteristics of the bus frequency detection units 64 is eliminated, and the power conversion devices 51 to 54 are controlled more uniformly, thereby making it possible to reduce the number of the bus frequency detection units and to simplify the constitution.

### Eighth Embodiment

Shown in Fig. 11 is an eighth embodiment of the alternating current motor driving system according to this invention. In the eighth embodiment, the upper limit speed adjustment unit 67 for calculating the upper limit speed adjustment output US for the speed instruction SS is used in each of the power conversion control circuits 60 of the power conversion devices 51 to 54 in the same manner as in the fifth embodiment, and the bus frequency detection unit 71 and the ineffective power instruction unit 72 are shared among the upper limit speed adjustment units 67 of the power conversion control circuits 60 of the power conversion devices 51 to 54 in the same manner as in the fourth embodiment shown in Fig. 7.

The effect achieved by the fifth embodiment is also achievable by the eighth embodiment. Further, since the bus frequency detection unit 71 and the ineffective power instruction unit 72 are shared among the power conversion devices 51 to 54, as compared with an embodiment wherein the bus frequency detection unit 64 and the ineffective power instruction unit 66 are disposed for each of the power conversion control circuit 60 of each of the power conversion devices 51 to 54, variations in characteristics of the bus frequency detection units 64 and the ineffective power instruction units 66 are eliminated, and the power conversion devices 51 to 54 are controlled more uniformly, thereby making it possible to reduce the numbers of the bus frequency detection units and the ineffective power instruction units and to simplify the constitution.

### Ninth Embodiment

Shown in Fig. 12 is a ninth embodiment of the alternating current motor driving system according to this invention. In the ninth embodiment, the current instruction unit 68, the upper limit current adjustment unit 69A, and the upper limit current control and output unit 69C are provided in each of the power conversion control circuits 60 of the power conversion devices 51 to 54.

The current instruction unit 68 receives the speed detection output SD from the speed detection unit 62 and the reference speed output SS from the reference speed setting unit 63 to generate a current instruction CJ which changes a difference between the speed detection output SD and the reference speed output SS to 0. The upper limit current adj ustment unit 69A receives the bus frequency detection output FD from the bus frequency detection unit 65 to calculate and output an upper limit current adjustment output UC which is proportional to the bus frequency detection output FD. The upper limit current control and output unit 69C receives the upper limit current adjustment output UC to output a current instruction LC whose upper limit is regulated by the upper limit current adjustment output UC. In the ninth embodiment, the bus frequency detection unit 65 is provided in each of the power conversion control circuits 60 of the power conversion devices 51 to 54, so that the bus frequency detection units 65 detect respective bus frequencies FB in the bus 30 and output respective bus frequency detection outputs FD.

The upper limit current adjustment output UC for the current instruction CJ changes depending on the bus frequency detection output FD, and the current instruction CJ from the current instruction unit 68 is forcibly regulated to be within the range equal to or lower than the upper limit current adjustment output UC in the upper limit current control and output unit 69C, so that the upper limit current control and output unit 69C generates the current instruction LC which is regulated to be equal to or lower than the upper limit current adjustment output UC based on the current instruction JC. The control and instruction unit 61 receives the regulated current instruction LC to apply to the power conversion device 55 a current instruction CI which is in response to the current instruction LC. The current instruction JC is output as it is to serve as a current instruction LC when the current instruction JC is lower than the upper limit current adjustment output UC, and the current instruction JC is output as a current instruction LC whose upper limit current adjustment output UC is regulated when the current instruction JC is equal to or higher than the upper limit current adjustment output UC. As a result, the power conversion circuit 55 supplies a current regulated by the upper limit current adjustment output UC to the corresponding one of the alternating current motors 81 to 84 to exchange an effective power regulated by the upper limit current adjustment output UC with the corresponding one of the alternating current motors 81 to 84, and each of the alternating current motors 81 to 84 is driven at a revolution speed regulated by the upper limit current adjustment output UC.

More specifically, in the case where one of the five prime movers 11 to 15 or one of the five alternating current generators 21 to 25 fails, the load on the common distribution bus 30 is increased to reduce the bus voltage and the bus frequency, and the upper limit current adjustment output UC is also reduced in response to the reduction in bus frequency Fb. Since the revolution speed of each of the alternating current motors 81 to 84 is reduced to be equal to or lower than the upper limit current adjustment output UC in response to the reduction in upper limit current adjustment output UC to reduce an overall load, when the revolution speed of each of the alternating current motors 81 to 84 is reduced to a certain predetermined value, the revolution speed of the alternating current motors 81 to 84 and the upper limit current adjustment output UC are stabilized at the predetermined values and controlled to maintain the predetermined values. As a result, operations of the alternating current motors 81 to 84 are continued with the predetermined revolution speed which is regulated to be equal to or lower than the upper limit current adj ustment output UC, and the bus frequency Fb is controlled to be maintained at the predetermined value regulated by the upper limit current adjustment output UC.

In the case where the power conversion device 51 (one of the four power conversion devices 51 to 54) or the alternating current motor 81 (one of the four alternating current motors 81 to 84) fails, the load on the common distribution bus 30 is reduced to increase the bus voltage and the bus frequency. The upper limit current adjustment output UC is increased in response to the increase in bus frequency, so that the revolution speed of each of the alternating current motors 82 to 84 to which the power conversion devices 52 to 54 correspond is increased. When the revolution speed of each of the alternating current motors 82 to 84 is increased to a predetermined value, the upper limit current adjustment output UC and the revolution speed of the alternating current motors 82 to 84 are stabilized at the predetermined values and controlled to maintain the predetermined values, and the bus frequency Fb is also controlled to be maintained at a predetermined value corresponding to the predetermined values, so that operations of the alternating current motors 82 to 84 are respectively continued by the power conversion devices 52 to 54.

By controlling the upper limit current adjustment output UC and the revolution speed of each of the alternating current motors in such a manner that the upper limit current adjustment output UC responds to the bus frequency detection output FD and the revolution speed stabilizes in a short time of about 0.5 to 1 second following the upper limit current adjustment output UC, and by so adjusting settings as to prevent a judgment of system down from being made during the stabilization time, the operations of the alternating current motors are continued with the system down being avoided.

### Tenth Embodiment

Shown in Fig. 13 is a tenth embodiment of the alternating current motor driving system according to this invention. In the tenth embodiment, the current instruction unit 68, the upper limit current adjustment unit 69A, and the upper limit current control and output unit 69C are provided in each of the power conversion control circuits 60 of the power conversion devices 51 to 54 in the same manner as in the ninth embodiment, and each of the power conversion control circuits 60 is provided with the ineffective power instruction unit 66 in the same manner as in the second embodiment.

The ineffective power instruction unit 66 is directly connected to the common distribution bus 30 like the ineffective power instruction unit 66 of the second embodiment to detect the bus voltage Vb of the common distribution bus 30 and calculates an ineffective power required for maintaining the bus voltage Vb at a predetermined value depending on the bus voltage Vb to generate an ineffective power instruction PI. In the sixth embodiment, too, the control instruction unit 61 performs an adjustment of an ineffective power of the power conversion circuit 55 based on the ineffective power instruction PI. The ineffective power exchanged between each of the power conversion circuits 55 and the corresponding one of the alternating current motors 81 to 84 is adjusted so as to maintain the bus voltage Vb at a predetermined value. The ineffective power adjustment by the ineffective power instruction unit 66 is executed in each of the power conversion devices 51 to 54, so that the loading machines 91 to 94 are driven continuously with the bus voltage Vb being adjusted to and stabilized at the predetermined value.

### Eleventh Embodiment

Shown in Fig. 14 is an eleventh embodiment of the alternating current motor driving system according to this invention. In the tenth embodiment, the current instruction unit 68, the upper limit current adjustment unit 69A, and the upper limit current control and output unit 69C are provided in each of the power conversion control circuits 60 of the power conversion devices 51 to 54 in the same manner as in the ninth embodiment, and the bus frequency detection unit 71 is shared among the power conversion control circuits 60 of the power conversion devices 51 to 54.

The effect achieved by the ninth embodiment is also achievable by the eleventh embodiment. Further, since the bus frequency detection unit 71 is shared among the power conversion devices 51 to 54, as compared with an embodiment wherein the bus frequency detection unit 64 is disposed for each of the power conversion devices 51 to 54, a variation in characteristics of the bus frequency detection units 64 is eliminated, and the power conversion devices 51 to 54 are controlled more uniformly, thereby making it possible to reduce the number of the bus frequency detection units and to simplify the constitution.

### Twelfth Embodiment

Shown in Fig. 14 is a twelfth embodiment of the alternating current motor driving system according to this invention. In the twelfth embodiment, the current instruction unit 68, the upper limit current adjustment unit 69A, and the upper limit current control and output unit 69C are provided in each of the power conversion control circuits 60 of the power conversion devices 51 to 54 in the same manner as in the ninth embodiment, and the bus frequency detection unit 71 and the ineffective power instruction unit 72 are shared among the power conversion control circuits 60 of the power conversion devices 51 to 54.

The effect achieved by the ninth embodiment is also achievable by the twelfth embodiment. Further, since the bus frequency detection unit 71 and the ineffective power instruction unit 72 are shared among the power conversion devices 51 to 54, as compared with an embodiment wherein the bus frequency detection unit 64 and the ineffective power instruction unit 66 are disposed for each of the power conversion control circuits 60 of the power conversion devices 51 to 54, variations in characteristics of the bus frequency detection units 64 and the ineffective power instruction units 66 are eliminated, and the power conversion devices 51 to 54 are controlled more uniformly, thereby making it possible to reduce the number of the bus frequency detection units and the ineffective power instruction units and to simplify the constitution.

### Industrial Applicability

The alternating current motor driving system of this invention is effectively used for driving a plurality of loads which utilize wind/hydraulic power by a plurality of alternating current motors, such as for driving a plurality of screws in a ship by way of a plurality of alternating current motors, driving a plurality of compressor in an LPG plant by way of a plurality of alternating current motors, and driving a plurality of blowers by way of plurality of alternating current motors.

## Claims

1. An alternating current motor driving system, comprising:
a plurality of alternating current generators driven by a prime mover; a common distribution bus to which the alternating current generators are connected; a plurality of power conversion devices connected to the common distribution bus; a plurality of power conversion control circuits respectively corresponding to the power conversion devices; a plurality of alternating current motors respectively driven by the power conversion devices; and a plurality of loading machines respectively driven by the alternating current motors, the alternating current motor driving system being **characterized in that**:
each of the power conversion control devices generates a current instruction for the corresponding power conversion device based on a corrected speed instruction obtained by correcting a speed instruction for the corresponding alternating current motor with a bus frequency detection output representing a detectedbus frequency of the common distribution bus; and
each of the power conversion devices controls an effective power exchanged with the corresponding alternating current motor based on the current instruction from the corresponding power conversion control circuit, thereby controlling the bus frequency to be a predetermined value corresponding to the corrected speed instruction in response to a load fluctuation of the common distribution bus.

2. The alternating current motor driving system according to claim 1, **characterized in that** each of the power conversion control circuits comprises: a bus frequency detection unit for detecting the bus frequency of the common distribution bus and outputting the bus frequency detection output; and a corrected speed instruction unit for outputting the corrected speed instruction based on the bus frequency detection output from the bus frequency detection unit.

3. The alternating current motor driving system according to claim 2, **characterized in that** each of the power conversion control circuits further comprises an ineffective power instruction unit for detecting a bus voltage of the common distribution bus and outputting an ineffective power instruction according to the bus voltage; and each of the power conversion devices further controls an ineffective power exchanged with the corresponding alternating current motor based on the ineffective power instruction to control the bus voltage to be a predetermined value.

4. The alternating current motor driving system according to claim 1, **characterized in that** the alternating current motor driving system comprises a bus frequency detection unit for detecting the bus frequency of the common distribution bus and outputting the bus frequency detection output, and each of the power conversion control circuits receives the bus frequency detection output from the bus frequency detection unit.

5. The alternating current motor driving system according to claim 4, **characterized in that** the alternating current motor driving system further comprises an ineffective power instruction unit for detecting a bus voltage of the common distribution bus and outputting an ineffective power instruction according to the bus voltage, and each of the power conversion devices further receives the ineffective power instruction from the ineffective power instruction unit and controls an ineffective power exchanged with the corresponding alternating current motor based on the ineffective power instruction, thereby controlling the bus voltage to be a predetermined value.

6. An alternating current motor driving system comprising: a plurality of alternating current generators driven by a prime mover; a common distribution bus to which the alternating current generators are connected; a plurality of power conversion devices connected to the common distribution bus; a plurality of power conversion control circuits respectively corresponding to the power conversion devices; a plurality of alternating current motors respectively driven by the power conversion devices; and a plurality of loading machines respectively driven by the alternating current motors, the alternating current motor driving system being **characterized in that**:
each of the power conversion control circuits generates a current instruction for the corresponding power conversion device based on an upper limit speed adjustment output obtained by adjusting an upper limit of a speed instruction for the corresponding alternating current motor according to a bus frequency detection output representing a detected bus frequency of the common distribution bus, the current instruction being in a range equal to or lower than the upper limit speed adjustment output; and
each of the power conversion devices controls an effective power exchanged with the corresponding alternating current motor to fall in the range equal to or lower than the upper limit speed adjustment output to the corresponding alternating current motor based on the current instruction from the corresponding power conversion control circuit, thereby controlling the bus frequency to be a predetermined value regulated by the upper limit speed adj ustment output in response to a load fluctuation of the common distribution bus.

7. The alternating current motor driving system according to claim 6, **characterized in that** each of the power conversion control circuits comprises: a bus frequency detection unit for detecting a bus frequency of the common distribution bus and outputting a bus frequency detection output; and an upper limit speed adjustment unit for generating the upper limit speed adjustment output based on the bus frequency detection output from the bus frequency detection unit.

8. The alternating current motor driving system according to claim 6, **characterized in that** each of the power conversion control circuits further comprises an ineffective power instruction unit for detecting a bus voltage of the common distribution bus and outputting an ineffective power instruction according to the bus voltage; and each of the power conversion devices further controls an ineffective power exchanged with the corresponding alternating current motor based on the ineffective power instruction, thereby controlling the bus voltage to be a predetermined value.

9. The alternating current motor driving system according to claim 6, **characterized in that** the alternating current motor driving system comprises a bus frequency detection unit for detecting the bus frequency of the common distribution bus and outputting the bus frequency detection output, and each of the power conversion control circuits comprises an upper limit speed adj ustment unit for receiving the bus frequency detection output from the bus frequency detection unit and generating the upper limit speed adjustment output.

10. The alternating current motor driving system according to claim 9, **characterized in that** the alternating current motor driving system further comprises an ineffective power instruction unit for detecting a bus voltage of the common distribution bus and outputting an ineffective power instruction according to the bus voltage, and each of the power conversion devices further receives the ineffective power instruction from the ineffective power instruction unit and controls an ineffective power exchanged with the corresponding alternating current motor based on the ineffective power instruction, thereby controlling the bus voltage to be a predetermined value.

11. An alternating current motor driving system comprising: a plurality of alternating current generators driven by a prime mover; a common distribution bus to which the alternating current generators are connected; a plurality of power conversion devices connected to the common distribution bus; a plurality of power conversion control circuits respectively corresponding to the power conversion devices; a plurality of alternating current motors respectively driven by the power conversion devices; and a plurality of loading machines respectively driven by the alternating current motors, the alternating current motor driving system being **characterized in that**:
each of the power conversion control circuits generates a current instruction for the alternating current motor based on an upper limit current adjustment output obtained by adjusting an upper limit of a current instruction for the corresponding power conversion device according to a bus frequency detection output representing a detected bus frequency of the common distribution bus, the current instruction for the corresponding alternating current motor being in a range equal to or lower than the upper limit current adjustment output; and
each of the power conversion devices controls an effective power exchanged with the corresponding alternating current motor to fall in the range equal to or lower than the upper limit current adj ustment output based on the current instruction from the corresponding power conversion control circuit, thereby controlling the bus frequency to be a predetermined value regulated by the upper limit current adjustment output in response to a load fluctuation of the common distribution bus.

12. The alternating current motor driving system according to claim 11, **characterized in that** each of the power conversion control circuits comprises: a bus frequency detection unit for detecting a bus frequency of the common distribution bus and outputting a bus frequency detection output; and an upper limit current adjustment unit for generating the upper limit current adjustment output based on the bus frequency detection output from the bus frequency detection unit.

13. The alternating current motor driving system according to claim 12, **characterized in that** each of the power conversion control circuits further comprises an ineffective power instruction unit for detecting a bus voltage of the common distribution bus and outputting an ineffective power instruction according to the bus voltage; and each of the power conversion devices further controls an ineffective power exchanged with the corresponding alternating current motor based on the ineffective power instruction, thereby controlling the bus voltage to be a predetermined value.

14. The alternating current motor driving system according to claim 11, **characterized in that** the alternating current motor driving system comprises a bus frequency detection unit for detecting the bus frequency of the common distribution bus and outputting the bus frequency detection output, and each of the power conversion control circuits comprises an upper limit current adjustment unit for receiving the bus frequency detection output from the bus frequency detection unit and generating the upper limit current adjustment output.

15. The alternating current motor driving system according to claim 14, **characterized in that** the alternating current motor driving system further comprises an ineffective power instruction unit for detecting a bus voltage of the common distribution bus and outputting an ineffective power instruction according to the bus voltage, and each of the power conversion devices further receives the ineffective power instruction from the ineffective power instruction unit and controls an ineffective power exchanged with the corresponding alternating current motor based on the ineffective power instruction, thereby controlling the bus voltage to be a predetermined value.

16. The alternating current motor driving system according to claim 1, 6, or 11, **characterized by** comprising at least one prime mover for generating a driving force by way of combustion of a fuel to drive the alternating current motors.

17. The alternating current motor driving system according to claim 1, 6, or 11, **characterized in that** the loading machines are wind/hydraulic power machines.
